# EUROPEAN PATENT APPLICATION

(11) **EP 1 358 989 A2**
(43) Date of publication of application: **05.11.2003**
(21) Application number: 03009635.8
(22) Date of filing: 29.04.2003
(51) Int. Cl.: B29C 41/20, B29C 41/04, B29C 45/00, B60S 1/50, B65D 25/04

(54) **Methods of moulding a container with separated volumes**

(30) Priority: 03.05.2002 GB 0210177
(71) Applicant: J.C. BAMFORD EXCAVATORS LIMITED, Uttoxeter Staffordshire ST14 5JP (GB)
(72) Inventor: Styger, Lee Edward, Burton-on-Trent, Derbyshire DE13 0PQ (GB)
(74) Representative: Lucking, David John

(57) **Abstract**

A method of moulding a container (10, 20) e.g. by rotational moulding in which moulding material is introduced into a mould cavity, and the mould is rotated about at least one axis of rotation, wherein prior to introducing the moulding material, a dividing member (12a) is located in the mould cavity, which divides the mould cavity so that when the moulding material is subsequently introduced and the mould rotated, moulding material coats the member (12a) so that the member (12a) becomes an integral part of the moulding and provides first and second separated volumes (22, 24) within the container (10, 20) in each of which fluid in use is contained, the fluid contained in the first volume (22) in use being maintained separate from the fluid in the second volume (24).

## Description

### Description of Invention

This invention related to method of moulding a container. The invention had been particularly but not exclusively developed for moulding a fluid container for a vehicle, such as a motor vehicle, or for a machine, such as an excavating and/or loading machine, but a container moulded by the methods of the invention may be uses in multifarious other applications.

It is known to mould a container in a plastic material, using a rotational moulding technique in which moulding material is introduced into a mould cavity, and the mould is rotated about at least one axis of rotation. The moulding material may be introduced into a mould cavity in the form of a powder which melts as it introduced as the mould is hot, or the powder is a mixture of chemicals which are introduced together or separately and chemically reacts to form a polymer, in each case which then coats the inside surface of the mould to form the container when the moulding material solidifies. Alternatively the moulding material may be introduced into the mould cavity in a liquid e.g. molten form, which then coats the inside surface of the mould to form the container when the moulding material solidifies.

According to a first aspect of the invention we provide a method of moulding a container for fluid by rotational moulding in which moulding material is introduced into a mould cavity, and the mould is rotated about at least one axis of rotation wherein prior to introducing the moulding material, a member is located in the mould cavity which divides the mould cavity , so that when the moulding material is subsequently introduced and the mould rotated, moulding material coats the member so that the member becomes an integral part of the moulding and provides first and second separated volumes within the container in each of which fluid in use is contained, the fluid contained in the first volume in use being maintained separate from the fluid in the second volume.

Thus using the method of the invention, the moulded container may be provided with an internal wall which extends across the moulded cavity to divide the moulded container into the two separated volumes. In this way a container may be provided which in the first of the separated volumes a first fluid may be contained, and in the second of the separated volumes a second fluid may be contained, the internal wall preventing the two fluids from mixing in the container.

In use, the first and second separated volumes may contain different fluids. For example, the moulding material may be suitable for containing in one of the volumes at least one of lubricant fluid, hydraulic fluid and engine coolant fluid. The other volume may contain a fluid such as windscreen washer fluid so that in sub-zero environments, the windscreen washer fluid may be warmed by the warm hydraulic or engine coolant fluid. However in use, other vehicle or machine fluids, or fluids not particular to vehicles or machines, may be contained within the first and second separated volumes of the container.

In one embodiment of the method, moulding material is introduced into the mould cavity at both sides of the dividing member simultaneously, but alternatively, the moulding material may be introduced into the mould cavity at a first side of the dividing member, and the mould rotated to mould a first container part including coating one side of the dividing member, and subsequently moulding material is introduced into the mould cavity at a second side of the dividing member and the mould rotated to mould a second container part including coating the second side of the dividing member whereby the container is moulded to include the two separated volumes.

Thus the two container parts are moulded individually, the mould being rotated appropriately for moulding each container part.

Conventionally, a mould for rotational moulding has at least two mould parts which are brought together to form the mould cavity. The method of the invention may include locating the dividing member in the moulding cavity by a plurality of locating elements which may for example pass through the walls of one or other of the mould parts.

The dividing member which is located in the mould cavity may include a plurality of locating formations with which the locating elements co-operate to locate the dividing member in the mould cavity. The locating elements may be removed from co-operation with the coated dividing member subsequent to moulding, prior to, subsequent to or during mould part separation to release the moulded container.

According to a second aspect of the invention we provide a method of moulding a container having at least two separated volumes including the steps of prior to introducing moulding material into a mould cavity, locating a dividing member in the mould cavity to divide the mould cavity, and then moulding a first container part by introducing moulding material into a first divided part of the mould cavity to mould a first container part which includes the first separated volume, removing the dividing member and then introducing moulding material into a second divided part of the mould cavity to mould a second container part which provides the second separated volume, the second container part attaching to and becoming integral with the first container part.

Thus the invention may be performed utilising alternative moulding methods to rotational moulding, such as for example only, injection moulding, and in the moulded container, no dividing member may be retained between the first and second separated volumes, but an internal wall dividing the container into the first and second separated volumes may be provided by moulding material only.

According to a third aspect of the invention we provide a method of moulding a container having at least first and second separated volumes including moulding a first container part by introducing moulding material into a first mould cavity to form a first of the separated volumes, removing the moulded first container part from the first mould cavity, placing the moulded first container part into a second mould cavity introducing into the second mould cavity, exteriorly of the first moulded container part, moulding material so that a second container part attaches to and becomes integral with the first moulded container part, the second container part providing the second separated volume.

Thus a transfer moulding method may be utilised to perform the invention.

In each of the second and third aspects of the invention, when moulding the first container part, at least one attachment formation may be moulded on the exterior of the first container part at a position where the second container part when subsequently moulded is to attach to the first container part, and moulding the second container part so that the attachment formation of the first container part may becomes embedded in moulded material of the second container part. Thus a strong attachment of the first and container parts is achieved.

In each of the examples of methods of the invention, the container moulded may be for containing two different fluids for a machine or vehicle.

Examples of methods of performing the invention will now be described with reference to the accompanying drawings in which:-
FIGURE 1 is a perspective illustrative view of a container moulded by the method of the invention;
FIGURE 2 is a perspective illustrative view of an alternative container made by the method of the invention.

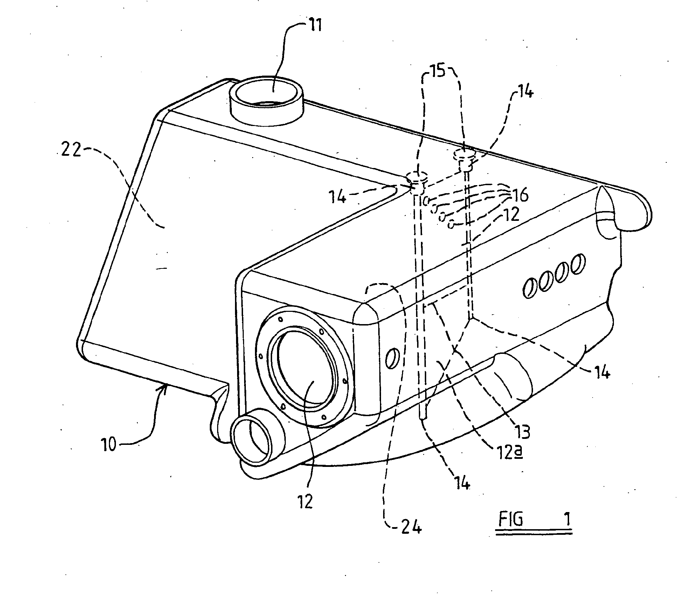

Referring to figure 1 of the drawings, a container 10 is made by moulding in a polymer using a rotational moulding method which involves introducing moulding material into a mould cavity of a mould, and rotating the mould about at least one axis of rotation.

In one method, the moulding material may be introduced into a mould cavity in the form of a powder which melts as it introduced as the mould is hot, or the powder chemically reacts to form a polymer, in each case which then coats the inside surface of the mould to form the container 10 when the moulding material solidifies. Alternatively the moulding material may be introduced into the mould cavity in a liquid e.g. molten form, which then coats the inside surface of the mould to form the container 10 when the moulding material solidifies.

The manner of rotating the mould may be determined to ensure generally even coating of the internal surface of the mould cavity depending on the configuration of the container 10. Conventionally, the mould cavity may be provided by a pair of mould parts which are separable after moulding to permit the moulded container 10 to be released from the mould.

It can be seen that the container 10 may be provided to a desired configuration to suit its application. For example where the container 10 is a tank for hydraulic fluid which has to fit in a given space in a machine or vehicle, the container may be moulded to a configuration suitable to fit that space.

The container 10 may be provided with any openings 11, 12 as desired for the container's function, usually subsequent to moulding.

In accordance with the invention, the container 10 is moulded with an internal wall 12. This is achieved by locating in the mould, a dividing member 12a, which may be made of metal, ceramics or any other suitable material, which dividing member 12a during moulding, becomes coated with moulding material.

In this example the dividing member 12a includes formations 14 with which locating elements 15 co-operate to locate the dividing member 12a in position in the mould cavity.

The locating elements 15 are male threaded elements which may be screwed through the mould wall into co-operation with the locating formations 14 of the dividing member 12a, the elements 15 including axial hollows in which the locating formations 14 of the dividing member 12a are received as the elements 15 are screwed into the position shown in the drawing.

With the dividing member 12a in position, when the moulding material is introduced into the mould cavity, the member 12a becomes coated with the moulding material and thus becomes an integral part of the moulding, thus providing the internal wall 12.

The dividing member 12a extends substantially all the way across the mould cavity, so that the dividing member 12a after moulding, separates the container 10 into first and second separated volumes 22 and 24, such that no exchange of fluid from one volume in one container part to the other volume in the other container part is permitted by the internal wall 12. Thus a container 10 is provided with a first volume in which in use, one fluid may be contained, and a second volume in which another fluid may be contained, the internal wall 12 preventing the fluids from mixing in the container 10 in use.

Such a container 10 may be used to store for example, an engine coolant fluid, or a lubricant fluid or a hydraulic fluid in one volume for examples, and a washer fluid, e.g. a windscreen washer fluid in the other volume for example only. In this case, particularly in sub-zero conditions, the washer fluid will be maintained warm by the warm engine coolant, lubricant or hydraulic fluid as the case may be, and this be protected from freezing. However the container 10 may be used to store other fluids in the respective first and second volumes 22, 24, which fluids may be for vehicle/machine use or otherwise.

In each case, the dividing member 12a in this example becomes embedded in the moulding material and an integral part of the container 10. Prior to, subsequent to, or even during separation of the mould parts to release the container 10 from the mould, the locating elements 15 may be withdrawn from any co-operation with the locating formations 14.

During moulding, moulding material may be introduced into the mould cavity at both sides of the dividing member 12a, either simultaneously or sequentially.

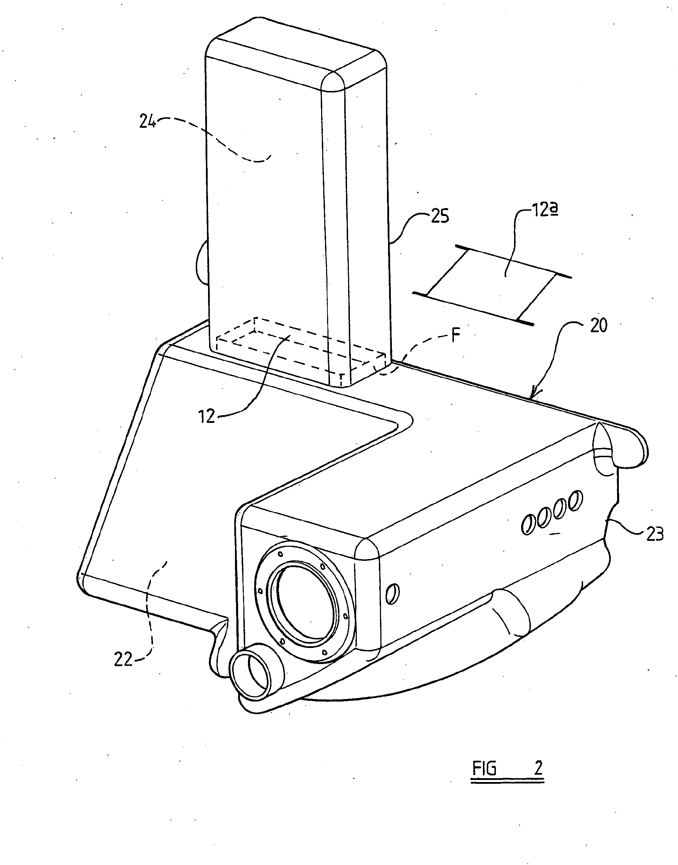

Referring to figure 2 another container 20 made by a moulding method of the invention is shown. In this example the container 20 includes first 22 and second 24 separated volumes, in each volume 22, 24 of which a fluid may be contained.

In one method, the container 20 may be made by a method substantially described with reference to figure 1 with a dividing member 12a becoming embedded in the moulded material between the first and second separated volumes 22, 24 in respective moulded parts 23, 25. However in a modified method, a dividing member 12a does not become embedded in moulding material in the final container 20. Rather, when a first container part 23 for the first volume 22 has been moulded, the dividing member 12a is removed from the mould cavity prior to a second container part 25 for the second volume 24 being moulded, so that an internal wall 12 which divides the container 20 into first and second separated volumes 22, 24 is provided which is made entirely of moulding material.

Where a rotational moulding technique is used, it will be appreciated that the mould may be rotated during moulding of the first container part 23 according to a first manner of rotation appropriate to ensure even coating of the internal surfaces of the mould cavity, for the particular configuration of the first container part 23, and the mould may be rotated during moulding of the second container part 25 according to a second manner of rotation appropriate to ensure even coating of the internal surfaces of the mould cavity, for the particular configuration of the second container part 23.

Whereas rotational moulding of the two container parts 23, 25 in a single moulding cavity may be performed to mould the container 20, it will be appreciated that other moulding methods may be employed to produce the container 20.

In one alternative example, instead of rotational moulding, non-rotational, injection moulding may be used, by injection moulding the first container part 23 with a dividing member 12a located in the moulding cavity, with the dividing member 12a being removed before (injection) moulding the second container part 25.

In another method a transfer moulding technique is used in which the first container part 23 may be moulded in a first moulding cavity, and the moulded first container part 23 is then transferred to a larger second moulding cavity into which moulding material is introduced to attach to the exterior of the first container part 23, thus to form the second container part 25 which becomes integral with the first container part 23.

In each case where the second container part 25 is moulded subsequent to the first container part 23, desirably, the first container part 23 is moulded with at least one external outwardly extending attachment formation an example of which is shown at F in figure 2, which attachment formation F is provided by a ridge upstanding from the first container part 23, which when the second container part 25 is subsequently moulded, becomes embedded in the material of the second container part 25 to facilitate and improve attachment of the second container part 25 to the first container part 23 so that the first and second container parts 23, 25 form a single, homogeneous moulding with the first and second separated moulded volumes 22, 24.

In the case of transfer moulding it will be appreciated that no dividing member 12a is required when moulding the first container part 23 to divide the mould cavity.

It will be appreciated that the first of the separated volumes may be larger or smaller than the second separated volume, such that the relative volumes may vary between 5 and 50% depending on what fluids are to be contained within the respective volumes. Particularly but not exclusively where one of the volumes contains windscreen washer fluid, within the moulded volume in use, a submersible fluid pump may be located so that the washer or other fluid may be pumped from the separated volume 22 or 24.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of moulding a container (10,20) for fluid by rotational moulding in which moulding material is introduced into a mould cavity, and the mould is rotated about at least one axis of rotation wherein prior to introducing the moulding material, a member (12a) is located in the mould cavity which divides the mould cavity, so that when the moulding material is subsequently introduced and the mould rotated, moulding material coats the member (12a) so that the member (12a) becomes an integral part of the moulding and provides first and second separated volumes (22, 24) within the container (10, 20) in each of which fluid in use is contained, the fluid contained in the first volume (22) in use being maintained separate from the fluid in the second volume (24).

2. A method according to claim 1 wherein in use, the first and second separated volumes (22, 24) contain different fluids.

3. A method according to claim 1 or claim 2 wherein the moulding material is suitable for containing in one of the volumes (22, 24) at least one of lubricant fluid, hydraulic fluid and engine coolant fluid and in the other volume (24, 22) a fluid which is warmed by the warm lubricant, hydraulic or engine coolant fluid.

4. A method according to any one of the preceding claims wherein moulding material is introduced into the mould cavity at both sides of the dividing member (12a) simultaneously.

5. A method according to any one of claims 1 to 3 wherein the moulding material is introduced into the mould cavity at a first side of the dividing member (12a), and the mould rotated to mould a first container part (23) including coating one side of the dividing member (12a), and subsequently moulding material is introduced into the mould cavity at a second side of the dividing member (12a) and the mould rotated to mould a second container part (25) including coating the second side of the dividing member (12a) whereby the container (10,20) is moulded to include the two separated volumes (22, 24).

6. A method according to claim 5 wherein the two container parts (23, 25) are moulded individually, the mould being rotated appropriately for moulding each container part (23, 25).

7. A method according to any one of the preceding claims wherein the mould for rotational moulding has at least two mould parts which are brought together to form the mould cavity.

8. A method according to claim 7 wherein the method includes locating the dividing member (12a) in the moulding cavity by a plurality of locating elements (15) which pass through the walls of one or other of the mould parts.

9. A method according to claim 8 wherein the dividing member (12a) includes a plurality of locating formations (14) with which the locating elements (15) co-operate to locate the dividing member (12a) in the mould cavity.

10. A method according to claim 8 or claim 9 wherein the locating elements (15) are removed from co-operation with the coated dividing member (12a) subsequent to moulding, prior to, subsequent to or during mould part separation to release the moulded container (10, 20).

11. A method of moulding a container (10, 20) having at least two separated volumes (22, 24) including the steps of prior to introducing moulding material into a mould cavity, locating a dividing member (12a) in the mould cavity to divide the mould cavity, and then moulding a first container part (23) by introducing moulding material into a first divided part of the mould cavity to mould a first container part (23) which includes the first separated volume (22), removing the dividing member (12a) and then introducing moulding material into a second divided part of the mould cavity to mould a second container part (25) which provides the second separated volume (24), the second container part (25) attaching to and becoming integral with the first container part (23).

12. A method of moulding a container (10, 20) having at least first and second separated volumes (22, 24) including moulding a first container part (23) by introducing moulding material into a first mould cavity to form a first (22) of the separated volumes, removing the moulded first container part (23) from the first mould cavity, placing the moulded first container part (23) into a second mould cavity introducing into the second mould cavity, exteriorly of the first moulded container part (23), moulding material so that a second container part (25) attaches to and becomes integral with the first moulded container part (23), the second container part (25) providing the second separated volume (24).

13. A method according to claim 11 or claim 12 wherein when moulding the first container part (23), at least one attachment formation (F) is moulded on the exterior of the first container part (23) at a position where the second container part (25) when subsequently moulded is to attach to the first container part (23), and moulding the second container part (25) so that the attachment formation (F) of the first container part (23) becomes embedded in moulded material of the second container part (25).

14. A method of moulding a container (10, 20) according to any one of the preceding claims wherein the container (10, 20) is for containing two different fluids for a machine or vehicle.
